Europäisches Patentamt

European Patent Office

Office européen des brevets

(19)

(11) Numéro de publication : **0 344 067 B1**

## (12) FASCICULE DE BREVET EUROPEEN

(45) Date de publication du fascicule du brevet :
**10.03.93 Bulletin 93/10**

(51) Int. Cl.$^5$ : **H02M 3/335,** H02M 3/337

(21) Numéro de dépôt : **89401417.4**

(22) Date de dépôt : **24.05.89**

(54) **Procédé de linéarisation pour convertisseur continu-continu et dispositifs mettant en oeuvre ce procéde.**

(30) Priorité : **26.05.88 FR 8807024**

(43) Date de publication de la demande :
**29.11.89 Bulletin 89/48**

(45) Mention de la délivrance du brevet :
**10.03.93 Bulletin 93/10**

(84) Etats contractants désignés :
**DE GB IT**

(56) Documents cités :
**WO-A-82/03302**

(73) Titulaire : **ECOLE NORMALE SUPERIEURE DE CACHAN (LESIR)
61 Avenue du Président Wilson
F-94230 Cachan (FR)**

(72) Inventeur : **Forest, François
69 rue Eugène Labiche
F-78290 Croissy Sur Seine (FR)**
Inventeur : **Lienart, Philippe
6 rue des Bourguignons
F-92600 Asnières (FR)**

(74) Mandataire : **Laroche, Danièle et al
c/o SOSPI 14-16 rue de la Baume
F-75008 Paris (FR)**

EP 0 344 067 B1

Jouve, 18, rue Saint-Denis, 75001 PARIS

# Description

La présente invention concerne un procédé de linéarisation des caractéristiques de sortie (tension, courant) d'un convertisseur continu-continu pseudo-résonant à transfert direct.

L'invention vise également des dispositifs permettant la mise en oeuvre du procédé.

De nombreux équipements électroniques nécessitent actuellement des sources de tension continue règlables et stabilisées. On peut citer en particulier les ordinateurs de toutes tailles et leurs périphériques. Par ailleurs, les systèmes électroniques embarqués utilisés dans les secteurs de l'aéronautique et de l'espace requièrent des sources de tension continue présentant des puissances massiques très élevées.

La recherche d'une fiabilité toujours plus grande des matériels électroniques et informatiques, alliée à des exigences accrues de compacité impose de disposer de convertisseurs d'énergie toujours plus performants.

On connaît déjà un convertisseur continu-continu pseudorésonant à transfert direct comprenant un transformateur comportant un enroulement primaire connecté à un étage primaire et un enroulement secondaire, ledit enroulement secondaire étant connecté à un étage secondaire comprenant un condensateur d'oscillation, un composant à conductibilité unidirectionnelle connecté en parallèle sur ledit condensateur et un organe à conductibilité unidirectionnelle en série avec ledit enroulement secondaire et ledit condensateur.

Un exemple de ce type de convertisseur est décrit dans le brevet américain US-A-4,415,959 (VINCIARELI). Un tel convertisseur CA, dont le schéma synoptique est donné sur la figure 1a des dessins annexés, comporte un étage primaire P relié à une source de tension continue E et comprenant un composant de commutation unidirectionnel T1 commandé par un circuit de contrôle CC.

Cet étage primaire P alimente l'enroulement primaire du transformateur T de rapport de transformation m. L'enroulement secondaire du transformateur T est relié à un étage secondaire S comprenant une diode D2 et un condensateur C en série avec l'enroulement secondaire et une diode D4 montée en parallèle sur ledit condensateur de telle sorte que les cathodes des diodes D2 et D4 sont reliées électriquement.

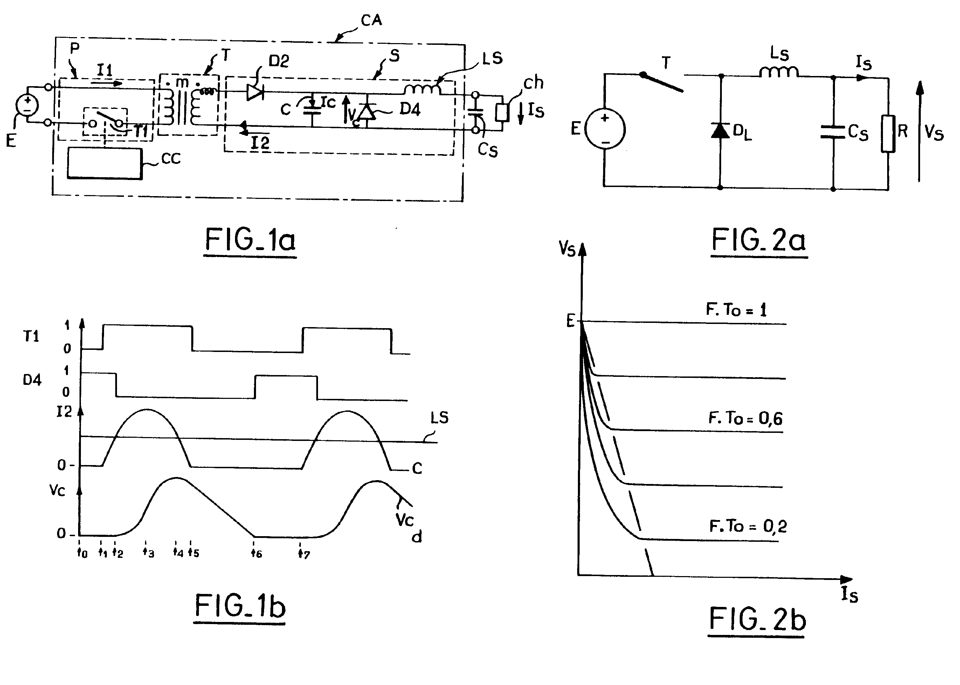

L'étage secondaire S est relié à une charge Ch à travers un filtre constitué d'une inductance de lissage LS et d'un condensateur CS destinés à assurer le lissage du courant IS et le filtrage de la tension de sortie. Le transformateur T présente nécessairement une inductance de fuite, ramenée au secondaire sur le schéma de la figure 1a, qui constitue avec le condensateur C un circuit oscillant (L, C).

Le fonctionnement de ce convertisseur peut être analysé à partir de la description des chronogrammes de la figure 1b.

A l'instant t = t0, le transistor T1 de l'étage primaire est bloqué et c'est la diode D4 de l'étage secondaire qui assure la continuité du courant IS dans la charge Ch. A l'instant t = t1, le circuit de commande CC commande le transistor T1 à l'état passant, les courants I1 et I2 croissent alors, la diode D2 étant devenue conductrice, tandis que la tension Vc aux bornes du condensateur C est maintenue nulle par conduction de la diode D4. L'inductance de la fuite L du transformateur limite cette croissance. Lorsqu'à l'instance t = t2, le courant I2 a atteint la valeur constante IS du courant de sortie, la diode D4 se bloque et la tension Vc aux bornes du condensateur C commence à croître et le transfert d'énergie s'effectue alors de l'inductance de fuite L vers le condensateur C. Au bout d'un temps pratiquement égal à la demi-période propre du circuit oscillant (L, C), le courant I2, après avoir suivi une évolution sinusoïdale, s'annule (instant t5). Le circuit de commande CC doit alors provoquer le blocage du transistor T1. Ce blocage ayant lieu à courant I1 nul, il y a minimisation des pertes de commutation dans ledit transistor T1 et on est en situation bien connue de "commutation naturelle"

Avant de s'annuler, le courant I2 est devenu à l'instant T4 inférieur au courant de sortie IS, ce qui implique que le courant IC dans le condensateur C s'inverse et devient négatif. La tension Vc décroît alors. A partir de l'instant t = t5, la décroissance de Vc est uniquement conditionnée par l'absorption du courant IS dans la charge Ch et est donc linéaire.

Lorsqu'à l'instant t = t6, la tension Vc s'annule, la diode D4 se débloque et assure la continuité du courant IS jusqu'au début de la phase de transfert suivante. A partir de cette analyse, on peut aisément justifier la dénomination d'un convertisseur continu-continu à transfert direct pseudo-résonant.

Ce convertisseur traite l'énergie issue d'une source de tension continue E pour délivrer dans une charge Ch un courant continu IS. Le transfert d'énergie est direct du fait qu'il a lieu lorsque le transistor T1 de l'étage primaire P est passant, par opposition à d'autres principes connus où le transfert d'énergie via le transformateur a lieu lorsque le transistor T1 est à l'état bloqué (tels les montages de type "Flyback"). La littérature anglo-saxonne et l'homme du métier emploient généralement le terme de "convertisseur forward".

Ce convertisseur est dit "pseudo-résonant" car la résonance effective du circuit (L, C) n'est jamais réellement mise en oeuvre complètement car elle conduirait inévitablement à un transfert inverse d'énergie du secondaire vers le primaire, ce qui bien entendu n'est pas recherché et doit être évité. La diode D2 évite le phénomène de résonance totale.

Mais un inconvénient majeur de cette structure de convertisseur réside dans le fait que les caractéristiques de sortie (tension - courant) sont fortement dépendantes du courant absorbé IS. Plus généralement, on rencontre dans cette structure, comme dans l'ensemble des convertisseurs à transfert direct, le phénomène de conduction discontinue correspondant à un courant de sortie IS inférieur à la moitié de l'ondulation $\Delta$ ILS du courant ILS dans l'inductance LS.

A ce phénomène, correspond une remontée des caractéristiques (VS, IS) du convertisseur, qui se traduit par une non-proportionnalité de VS vis-à-vis du paramètre de réglage.

Une illustration de ce phénomène est donnée par l'exemple d'un hacheur série (figure 2a), commandé à temps de conduction fixe To et fréquence variable F. L'ensemble des caractéristiques de sortie, repréentées en figure 2b et paramétrées par F. To, converge immanquablement vers E lorsque le courant de sortie IS tend vers O (fonctionnement à vide).

La non-linéarité des caractéristiques (tension - courant) est un inconvénient majeur dès qu'il s'agit d'effectuer une boucle de contrôle de la tension de sortie VS et plus généralement d'insérer ce convertisseur dans un système asservi. La non-linéarité entraîne la mise en oeuvre de fonctions de transfert très complexes et difficiles à manier dans un calcul d'asservissement.

Par ailleurs, si le convertisseur continu-continu est employé pour alimenter une charge d'impédance variable, à tension constante, de sérieux problèmes de contrôle apparaissent et nécessitent des asservissements spécifiques souvent délicats et coûteux.

Le but de la présente invention est de remédier à ces inconvénients en mettant en oeuvre un procédé de linéarisation des caractéristiques de sortie (tensioncourant) d'un convertisseur continu-continu pseudo-résonant à transfert direct comprenant un transformateur comportant un enroulement primaire, un enroulement secondaire, un condensateur d'oscillation, et soumis à des cycles de commande prédéterminés comprenant chacun une phase de conduction directe.

Suivant l'invention, au cours de chaque cycle, on provoque successivement :

- la décharge totale du condensateur d'oscillation, quel que soit le courant de sortie, commencée au plus tard à l'issue de chaque phase de conduction directe,
- et le maintien à une valeur sensiblement nulle de la tension aux bornes dudit condensateur jusqu'au début de la phase de conduction directe suivante,
- la décharge totale du condensateur comprenant :

. une première étape se déroulant durant la phase de conduction directe (l'étage primaire étant alors à l'état passant) et commencée lors de l'inversion du courant dans le condensateur,

. une seconde étape commencée à l'issue de la phase de conduction directe et s'achevant avec l'annulation de la tension aux bornes du condensateur.

Ainsi, la décharge totale du condensateur ne dépend plus seulement de l'existence d'un courant de sortie IS continu, à la différence de ce qui se passe dans les convertisseurs de l'art antérieur dans lesquels cette décharge dépend exclusivement de la présence d'un courant de sortie IS.

Avec le procédé conforme à l'invention, même en l'absence de charge, cette décharge est provoquée. De plus grâce au maintien à une valeur sensiblement nulle de la tension aux bornes du condensateur d'oscillation, en permettant l'inversion du courant ILS dans LS, tout risque de réapparition aux bornes de la diode D4 placée en parallèle sur ledit condensateur C (voir figure 1), d'une tension positive à l'issue de la phase de conduction de cette diode est exclu. Ceci permet donc un fonctionnement en régime de conduction continue quel que soit le courant de sortie avec des caractéristiques (tension - courant) quasi-linéaires, comme le montrent les résultats expérimentaux décrits dans la suite.

En outre, la division en deux étapes est effective en pratique du fait que, pendant la phase de conduction directe, le condensateur C est par principe connecté à l'enroulement secondaire du transformateur et que sa décharge est intimement liée à l'état électrique du circuit oscillant (L, C), tandis qu'à l'issue de cette phase de conduction directe, le condensateur ne se trouve plus en situation de résonance avec l'inductance de fuite du transformateur.

Par ailleurs, l'étape de maintien à une valeur sensiblement nulle de la tension aux bornes du condensateur d'oscillation est de préférence divisée en deux sous-étapes, l'une correspondant à un maintien actif, autorisant l'inversion du courant dans LS, et mettant en oeuvre des moyens de maintien pendant une durée prédéterminée, et l'autre, dite de sécurité, suivant immédiatement la première et se déroulant jusqu'au début du cycle de commande suivant, durant laquelle lesdits moyens de maintien ne sont plus mis en oeuvre. Cette dernière étape est rendue nécessaire afin d'éviter, au début d'un nouveau cycle, la mise en court-circuit intempestive de l'enroulement secondaire du transformateur. En effet, au début de la phase de conduction directe, la tension développée au secondaire du transformateur provoque la mise à l'état passant de la diode D2. Cette mise en conduction combinée avec le maintien effectif d'une valeur sensiblement nulle aux bornes du condensateur conduirait de fait à un court-circuit du transformateur.

La mise en oeuvre d'une étape de sécurité résout avantageusement ce problème.

Le procédé conforme à l'invention peut avantageument être mis en oeuvre dans un convertisseur continu-continu pseudo-résonant à transfert direct d'énergie comprenant des transformateurs comportant chacun un enroulement primaire connecté à un étage primaire et des enroulements secondaires, agencés en série ou en parallèle et à commande entrelacée, chacun desdits enroulements secondaires étant connecté à un étage secondaire comprenant un condensateur d'oscillation, un composant à conductibilité unidirectionnelle connecté en parallèle sur ledit condensateur et un composant à conductibilité unidirectionnelle en série avec ledit enroulement secondaire et ledit condensateur.

Suivant l'invention, ce convertisseur mettant en oeuvre le procédé revendiqué comprend en outre :
- un composant de commutation connecté en parallèle sur l'organe à conductibilité unidirectionnelle en série avec ledit enroulement et ledit condensateur, et coopérant avec celui-ci pour réaliser un composant de commutation bidirectionnel en courant,
- et un composant de commutation connecté en parallèle avec le condensateur d'oscillation et le composant à conductibilité unidirectionnelle correspondant, et coopérant avec celui-ci pour réaliser un composant de commutation bidirectionnel en courant.

On dispose ainsi de moyens de commutation autorisant la bidirectionnalité du courant dans l'étage secondaire du convertisseur. Cette bidirectionnalité vaut bien entendu aussi pour l'étage primaire. Par rapport aux réalisations de l'art antérieur, elle permet une décroissance beaucoup plus importante de la tension aux bornes du condensateur pendant la phase de conduction directe. La caractéristique fondamentale des convertisseurs pseudo-résonants, à savoir la commutation naturelle, est bien entendu conservée, ouvrant la voie à l'emploi de fréquences de découpage de plus en plus élevées, comme cela sera expliqué par la suite.

Le composant de commutation bidirectionnel en courant réalisé autour du composant à conductibilité unidirectionnelle (de préférence, une diode) connecté en série avec le condensateur et l'un des enroulements secondaires du convertisseur conforme à l'invention est mis en oeuvre dans l'étape de décharge totale du condensateur, tandis que l'autre composant de commutation bidirectionnel en courant est mis en oeuvre dans l'étape de maintien à une valeur sensiblement nulle de la tension aux bornes dudit condensateur.

D'autres particularités et avantages de l'invention apparaîtront encore dans la description ci-après.

Aux dessins annexés, donnés à titre d'exemples non limitatifs :
- la figure 1a est un schéma simplifié d'un convertisseur continu-continu pseudo-résonant à transfert direct représentatif de l'art antérieur ;

- la figure 1b montre les formes d'ondes caractéristiques de ce type de convertisseur ;
- la figure 2a est un schéma simplifié d'un convertisseur de l'art antérieur muni en sortie d'un filtre de type (L, C) ;
- la figure 2b représente un faisceau de caractéristiques de sortie (tension - courant) obtenues avec ce type de convertisseur ;
- la figure 3 représente un chronogramme global des différentes étapes du procédé conforme à l'invention ;
- la figure 4 est un schéma synoptique d'un convertisseur continu-continu pseudo-résonant à transfert direct conforme à l'invention ;
- la figure 5 est un schéma d'un mode de réalisation d'un convertisseur comprenant plusieurs étages secondaires ;
- la figure 6 est un schéma d'un mode de réalisation particulier d'un étage secondaire d'un convertisseur suivant l'invention ;
- la figure 7 est un schéma électrique d'un convertisseur conforme à l'invention dans lequel l'étage primaire est un demi-pont asymétrique ;
- la figure 8 illustre les formes d'ondes principales obtenues dans un convertisseur conforme à l'invention et fonctionnant à vide ;
- les figures 9a et 9b montrent respectivement des chronogrammes obtenus expérimentalement en régime de conduction continue et en régime de conduction discontinue ;
- la figure 10 montre, pour diverses valeurs de la fréquence de découpage, les caractéristiques de sortie d'un convertisseur conforme à l'invention ;
- la figure 11a représente le schéma électrique d'un mode préféré de réalisation des moyens de commande des composants de commande bidirectionnels en courant ;
- la figure 11b représente les chronogrammes de variables logiques utilisées dans les moyens de commande précités.
- la figure 12 est le schéma d'un convertisseur conforme à l'invention dans une version utilisant un pont symétrique en étage primaire et deux étages secondaires en série ;
- la figure 13 représente des formes d'ondes typiques des signaux de commande appliqués aux différents transistors de la structure de convertisseur selon la figure 12 ;
- la figure 14 représente les formes d'ondes typiques des variables électriques principales dans ce type de convertisseur, en régime de conduction discontinue ;
- la figure 15 est un chronogramme des courants primaire et magnétisant dans le transformateur d'un convertisseur équipé d'un étage primaire en pont symétrique ;
- la figure 16 est un schéma électrique d'un mode particulier de connexion de deux étages secondaires en parallèlle ;
- la figure 17 rassemble des formes d'ondes typiques rencontrées dans une configuration de convertisseur avec étages secondaires connectés en parallèle.

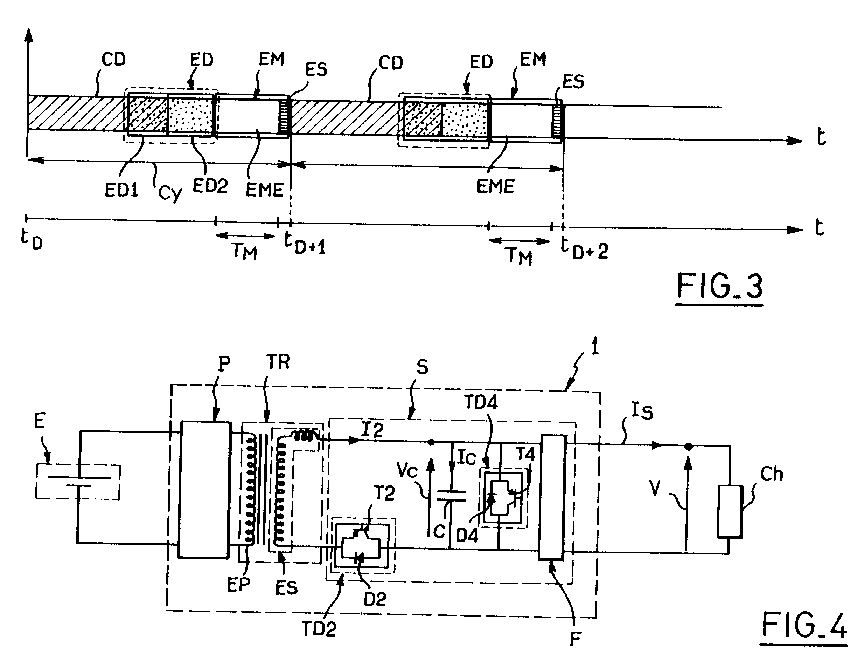

Le procédé de linéarisation des caractéristiques de sortie (tension - courant) conforme à l'invention met en oeuvre une étape de décharge totale ED et une étape de maintien EM, dont la place à l'intérieur d'une période de commande est illustrée sur le chronogramme de la figure 3, en référence au schéma synoptique général de convertisseur de la figure 4. Pendant la durée d'un cycle CY, le convertisseur est soumis à une phase de conduction directe CD, durant laquelle la tension appliquée à l'enroulement primaire EP du transformateur TR est égale à la tension continue E, aux chutes de tension dans l'étage primaire P près. L'étape de décharge ED est amorcée dès que le courant dans le condensateur d'oscillation s'inverse. D'une manière générale, l'étape de décharge ED débute pendant la phase de conduction directe CD. Elle se termine avec l'annulation de la tension VC aux bornes du condensateur C. On distingue à l'intérieur de l'étape de décharge ED, une première étape de décharge ED1 qui a lieu en phase de conduction directe CD et une seconde étape de décharge ED2 qui a lieu après la phase de conduction directe CD.

L'étape de décharge totale ED est immédiatement suivie d'une étape de maintien EM à une valeur sensiblement nulle de la tention Vc aux bornes du condensateur C. Cette étape de maintien EM est elle-même divisée en une première étape EME durant laquelle des moyens de maintien sont effectivement mis en oeuvre et en une seconde étape ES, dite de sécurité, pendant laquelle lesdits moyens sont désactivés, rendue nécessaire pour éviter des mises en conduction simultanées intempestivesde plusieurs organes de commutation lors de la mise en oeuvre de la phase de conduction directe suivante, comme cela sera expliqué plus en détail dans la suite.

La structure générale d'un convertisseur continu-continu pseudo-résonant à transfert direct conforme à l'invention comprenant un transformateur comportant un enroulement primaire et un enroulement secondaire est présentée sur la figure 4, ce convertisseur mettant en oeuvre le procédé selon l'invention.

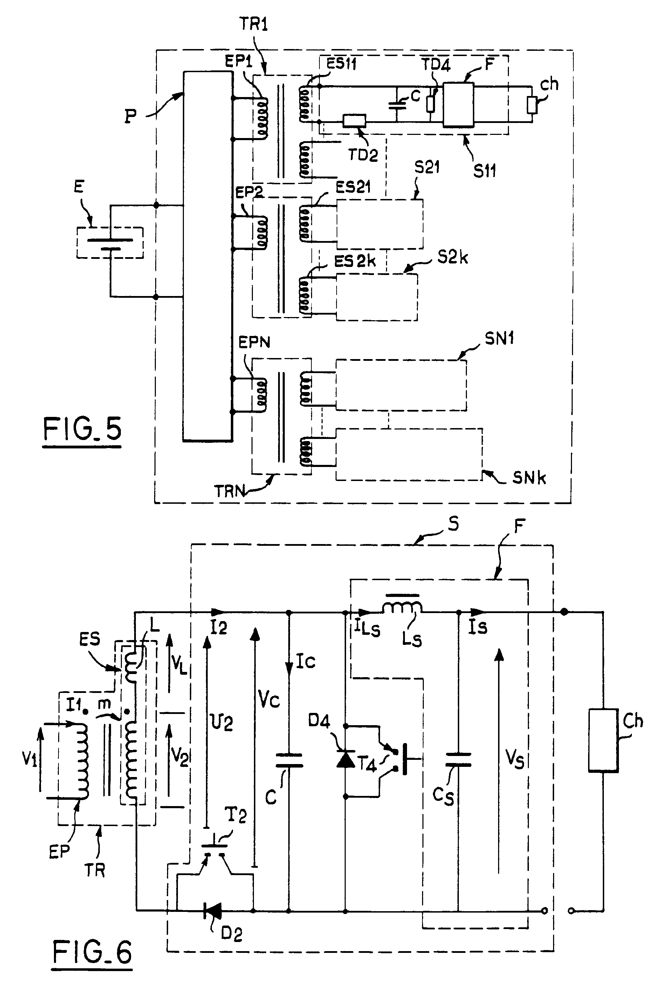

Un tel convertisseur comprend un transformateur TR, un étage primaire P et un étage secondaire S. L'étage primaire P assure l'alimentation de l'enroulement primaire EP du transformateur TR à partir de la source de tension continue E. L'étage secondaire S assure le contrôle de l'énergie issue de la source de tension continue E et transitant par le transformateur TR et sa mise en forme pour délivrer à la sortie d'un filtre F une tension continue V de valeur règlable aux bornes d'une charge quelconque Ch. Il comprend un condensateur C qui entre en résonance avec l'inductance de fuite L du transformateur TR ramenée au secondaire et deux composants de commutation TD2 et TD4 bidirectionnels en courant. Ces deux composants de commutation sont constitués chacun par la combinaison d'un composant à conductibilité monodirectionnelle D2, D4 et d'un composant de commutation monodirectionnel en courant T2, T4. Ils sont placés au sein de l'étage secondaire S, de telle sorte que l'un, TD2, contrôle la mise en série du condensateur C et de l'enroulement secondaire ES et que l'autre, TD4, contrôle la mise en court-circuit du condensateur C. Un convertisseur continu-continu 1 conforme à l'invention peut comprendre plusieurs transformateurs TR1, ..., TRN connectés via un étage primaire P à une source de tension continue unique E, comme l'illustre la figure 5. Chacun de ces transformateurs TR1, ..., TRN peut être muni de plusieurs enroulements secondaires ES11, ... ES1M ..., ESN1, ..., ESNM reliés chacun à un étage secondaire du type de celui décrit à la figure précédente. Ces étages sont agencés en série ou en parallèle et commandés en mode entrelacé.

Les caractéristiques principales de l'invention étant situées dans l'étage secondaire S, on décrira maintenant en détail cet étage dont le schéma électrique, dans une version préférée de l'invention, est représenté en figure 6.

Le transformateur TR présente un rapport de transformation m. La tension U2 présente aux bornes de l'enroulement ES du transformateur TR est la somme de la tension V2 (égale au produit du rapport de transformation m par la tension V1 aux bornes du primaire) et de la tension induite VL liée aux fuites du transformateur représentées par l'inductance de fuite L ramenée au secondaire.

Si I2 est le courant traversant l'enroulement secondaire ES, la tension U2 peut s'exprimer de la façon suivante, en considérant les conditions de signe représentées sur la figure 6 :

$$U2 = m.V1 - L \, dI2/dt \quad (1)$$

tandis que

$$V2 = m.V1 \quad (2).$$

Le filtre F est ici constitué d'une cellule LS, CS comprenant une inductance LS et un condensateur CS suivant un mode de réalisation bien connu.

Soient ILS et IS les courants traversant respectivement l'inductance LS et la charge Ch connectée aux bornes de sortie de l'étage secondaire S.

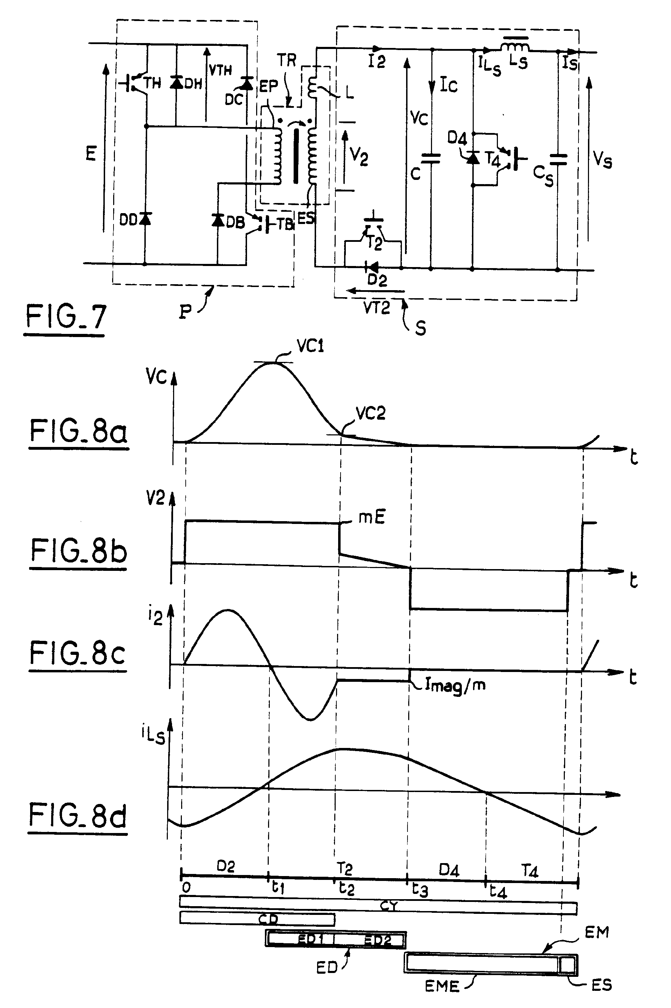

Un mode de réalisation préféré de l'étage primaire P est représenté sur la figure 7. L'étage primaire P est ici un demi-pont asymétrique qui comprend deux composants de commutation unidirectionnels en courant TH, TB, par exemple des transistors, aux bornes desquels sont connectés deux composants à conductibilité unidirectionnelle DH, DB, par exemple des diodes et deux autres composants à conductibilité unidirectionnelle DD, DC, par exemple des diodes, l'ensemble de ces composants étant connecté suivant un mode de connexion bien connu dans l'art antérieur.

Par rapport au mode de réalisation de l'art antérieur mettant en oeuvre un enroulement tertiaire, ce mode de réalisation de l'étage primaire P présente deux avantages importants :

- les contraintes de tension supportées par les composants de commutation, diodes et transistors, sont divisées par deux, pour une puissance transférée égale ;

- la suppression de l'enroulement tertiaire permet une réduction du coût du transformateur TR, l'enroulement primaire assurant la démagnétisation du circuit magnétique du transformateur TR.

Les paires respectives (TH, DH) et (TB, DB) réalisent des composants de commutation bidirectionnels en courant. Elles fonctionnent simultanément et commandent l'alimentation de l'enroulement primaire EP du transformateur TR, en relation avec le circuit oscillant (L, C).

Les diodes DD et DC assurent le cycle de démagnétisation du circuit magnétique du transformateur TR par l'enroulement primaire EP.

Les figures 8a, 8b, 8c, 8d illustrent les formes d'ondes principales rencontrées en régime discontinu dans l'étage secondaire S d'un convertisseur conforme à l'invention, tel que décrit plus haut.

Pendant la phase de conduction directe CD, l'étage primaire P (figure 7) applique sur l'enroulement primaire EP une tension V1 sensiblement égale à la tension continue d'alimentation E (à la chute de tension dans les organes de commutation de l'étage primaire P près).

La tension induite par transformation est alors V2 = mE (figure 8b), tandis que les conditions initiales de cette phase de conduction directe CD sont

$$VC = 0$$
$$I2 = O \quad (3)$$

et

$$ILS \leqq 0.$$

Dans ces conditions, la diode D2 est passante et le condensateur C constitue alors avec l'inductance de fuite ramenée au secondaire L un circuit oscillant qui entre en résonance avec un amortissement non nul dû à la résistance de l'enroulement secondaire et des connexions diverses, et aux résistances séries équivalentes du condensateur C et de la diode D2.

Le courant I2 dans l'enroulement secondaire va tout d'abord croître, passer par un maximum, puis décroître et enfin s'annuler (figure 8c), tandis que la tension VC aux bornes du condensateur C va atteindre son maximum VC1, en référence à la figure 8a. A cet instant, le composant de commutation unidirectionnel du composant de commutation bidirectionnel en courant TD2, en l'occurence le transistor T2, doit avoir été commandé en mode passant, permettant ainsi au courant I2 de prendre une valeur négative, assurant ainsi la deuxième partie de la phase de conduction directe CD durant laquelle la tension VC aux bornes du condensateur C décroît. Cette deuxième partie est aussi la première étape de décharge ED1 du condensateur C qui s'achève à la fin de la phase de conduction directe (CD) commandée par des moyens de commande de l'étage primaire P. L'instant de fin de phase de conduction directe (CD) est prédéterminé en fonction de la pulsation du circuit résonnant L, C et doit avoir lieu avant que le courant I2 ne réatteigne la valeur nulle.

La fin de la phase de conduction directe (CD) se traduit en pratique par le transfert des Ampères-tours magnétisant du primaire (courant correspondant Imag) au secondaire (courant correspondant Imag/m).

Débute alors la deuxième étape de décharge totale (ED2) pendant laquelle on peut considèrer ce courant secondaire Imag/m comme quasi-constant, ce que prouve l'expérience. On peut donc l'assimiler à une source de courant constant qui va contribuer à la poursuite de la décharge du condensateur C, comme l'illustre la figure 8a. Cette décharge est pratiquement linéaire en fonction du temps du fait que

$$VC = - Imag/mC (t - t2) + VC2, \quad (4)$$

VC2 étant la tension aux bornes du condensateur C à l'instant t2 de fin de la phase de conduction directe (CD). Durant cette étape, la tension V2 est égale à la tension VC du fait que le courant I2 constant n'induit pas de tension aux bornes de l'inductance de fuite. L'étape ED2 s'achève à l'annulation de la tension VC qui provoque le blocage du transistor T2, comme cela sera expliqué dans la suite.

Le courant ILS parcourant l'inductrice LS du filtre F est alors positif, comme le montre la forme d'onde de la figure 8d.

Le composant de commutation bidirectionnel en courant TD2 étant dorénavant bloqué, le courant ILS transite par la diode D4 appelée couramment diode de "roue libre", et court-circuite le condensateur C, maintenant la tension à ses bornes VC à une valeur quasi-nulle. Le courant ILS dans l'inductance de lissage LS décroît, l'ensemble filtre/charge étant soumis à une différence de potentiel quasi-nulle.

Le composant de commutation T4 peut être commandé dès le début de la phase de "roue libre" EM pour prendre en quelque sorte le relais de la diode D4 lorsque le courant ILS atteint la valeur nulle et devient négatif.

On provoque le blocage de T4 un peu avant l'instant de départ du cycle suivant, afin d'éviter une conduction simultanée de la diode D2 et de l'organe de commutation T4, qui aurait pour effet de court-circuiter l'enroulement secondaire ES du transformateur TR. L'étape de maintien EM comprend ainsi une étape de sécurité ES durant laquelle le condensateur C assure la continuité du courant ILS.

Dans l'exemple décrit ci-dessus, le courant ILS s'annule, ce qui correspond à un régime où IS < Δ ILS/2.

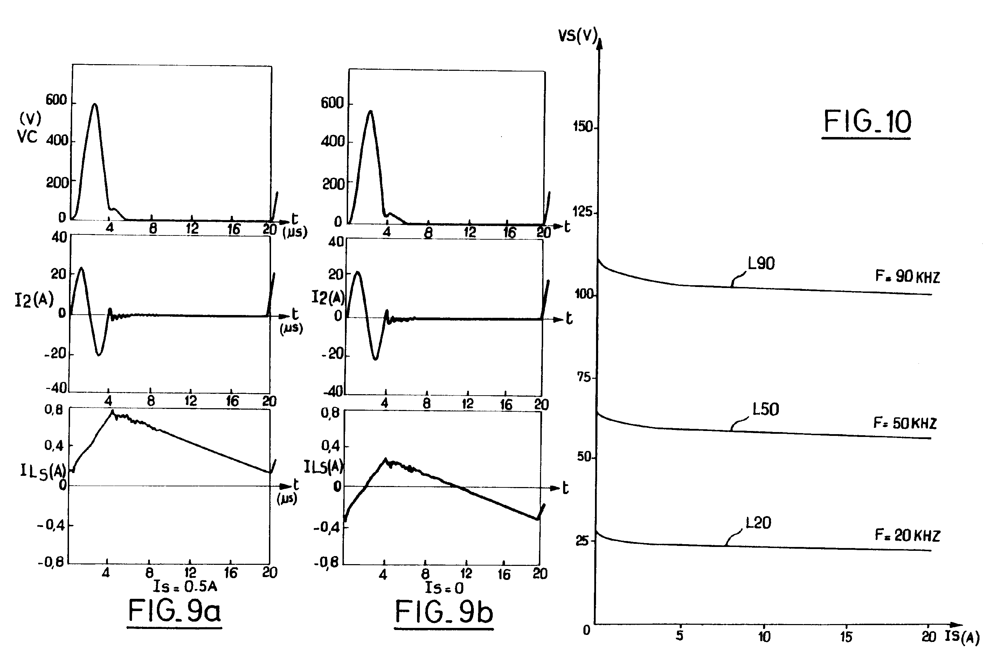

La figure 9 illustre, dans les deux régimes précités, les formes d'ondes de la tension VC aux bornes du condensateur d'oscillation C, du courant I2 dans l'enroulement secondaire ES du transformateur TR et du courant ILS dans l'inductance de lissage LS du filtre F obtenues expérimentalement avec un convertisseur conforme à l'invention, de pussance nominale 2 kW (100 V - 20 A) à une fréquence de découpage de 90 kHz.

Les conditions de fonctionnement sont les suivantes :

- tension d'alimentation continue : E = 450 V
- rapport de transformation : m = 0,72
- fréquence du circuit oscillant (L, C) F0 = 275 kHz
- fréquence de découpage : F = 50 kHz.

Dans le premier régime (figure 9a), le courant ILS est constamment supérieur à 0, tandis que dans le deuxième régime (figure 9b), illustré dans le cas limite où le courant de sortie IS est nul, le courant ILS est bidirectionnel.

On constate que les formes d'ondes VC et I2 sont inchangées dans l'un ou l'autre régime. Ainsi, le procédé conforme à l'invention a pour effet de ne plus faire dépendre ces grandeurs physiques du niveau de courant de sortie et donc de la charge, à la différence des réalisations de l'art antérieur (cf figure 2a).

La linéarisation des caractéristiques de sortie (tension - courant) obtenue par le procédé conforme à l'invention est illustrée par la figure 10, où est présenté, un faisceau de caractéristiques (L20, L50, L90) obtenues dans un convertisseur mettant en oeuvre ce procédé.

La dépendance des caractéristiques en fonction de la fréquence de découpage s'explique par le fait que, selon le principe du convertisseur continu-continu à pseudo-résonance, la fréquence de découpage est directement liée au rapport cyclique $\alpha$ défini auparavant.

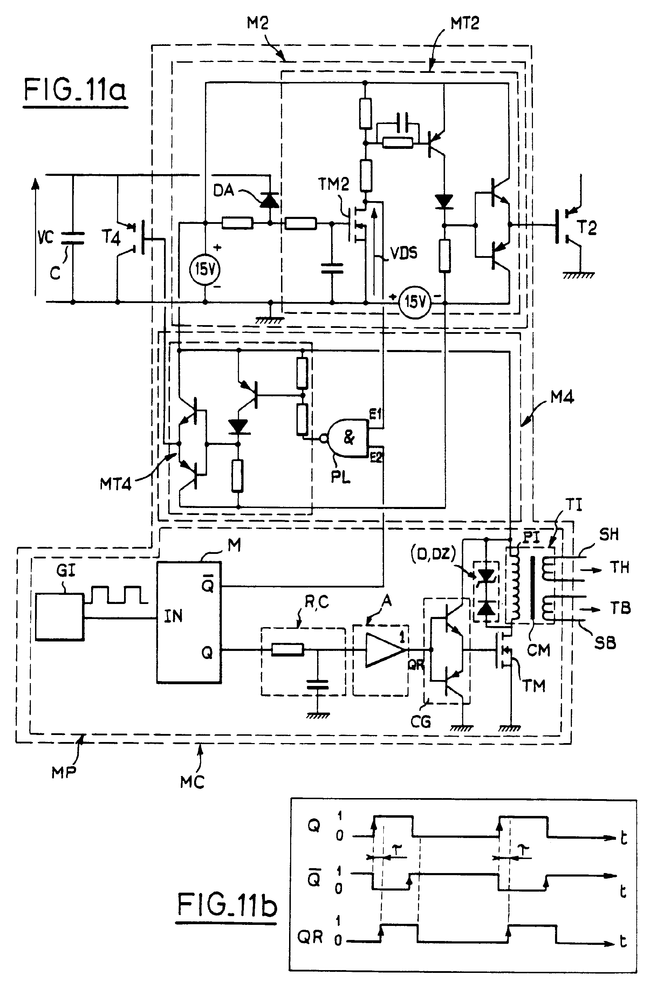

Les différents composants de commutation mis en oeuvre dans les convertisseurs conformes à l'invention T2, T4, TH, TB, peuvent être commandés de façon avantageuse par des moyens de commande MC communs, tels que le circuit de commande décrit sur la figure 11a, réalisé pour commander des transistors.

Les deux transistors TH et TB de l'étage primaire sont commandés simultanément par un circuit de commande MP de structure bien connue dans l'art antérieur, comprenant un générateur GI d'un signal en forme de créneaux de rapport cyclique fixe (de préférence 1/2), attaquant un circuit intègré monostable M ; la sortie Q dudit monostable est reliée à l'entrée d'un circuit filtre R, C suivi d'un amplificateur suiveur A. La sortie de ce dernier attaque une structure de commande de grille d'un transistor à grille isolée TM. Suivant un principe bien connu, la conduction de ce transistor TM provoque un transfert d'énergie du primaire du transformateur TI aux deux secondaires SH et SB alimentant respectivement les commandes de grille des transistors TH et TB. Un tel système de commande assure l'isolement galvanique des transistors de puissance TH et TB par rapport au système de commande. La diode D et la diode zener DZ placées en parallèle sur l'enroulement primaire PI du transformateur TI permettent la démagnétisation et désaturation du circuit magnétique CM dudit transformateur en phase de blocage du transistor TM.

Le transistor T2 est commandé en fonction du signe de la tension VC aux bornes du condensateur C, au moyen d'un circuit de commande M2 mettant en oeuvre le principe bien connu de l'aiguilleur à diode.

Le montage de commande M2 comprend un étage de commande MT2 attaquant la grille ou base du transistor T2 selon que celui-ci est un transistor à grille isolée ou un transistor bipolaire. Cet étage de commande commande le transistor T2 en mode passant dès lors que la tension Vc est supérieure à la tension de seuil de TM2. Cette fonction est réalisée par l'intermédiaire de la diode DA qui permet la recopie de VC sur la grille de TM2 tant que VC est inférieure à la tension d'alimentation de commande. Lorsque la tension VC s'annule, la diode d'aiguillage DA devient passante et maintient le transistor TM2 à l'état bloqué, ce qui a pour effet, via les différents composants de l'étage de commande MT2, de bloquer le transistor T2.

Le transistor T4 est commandé à la fois en fonction de la tension VC aux bornes du condensateur C et de l'état de commande de l'étage primaire du convertisseur.

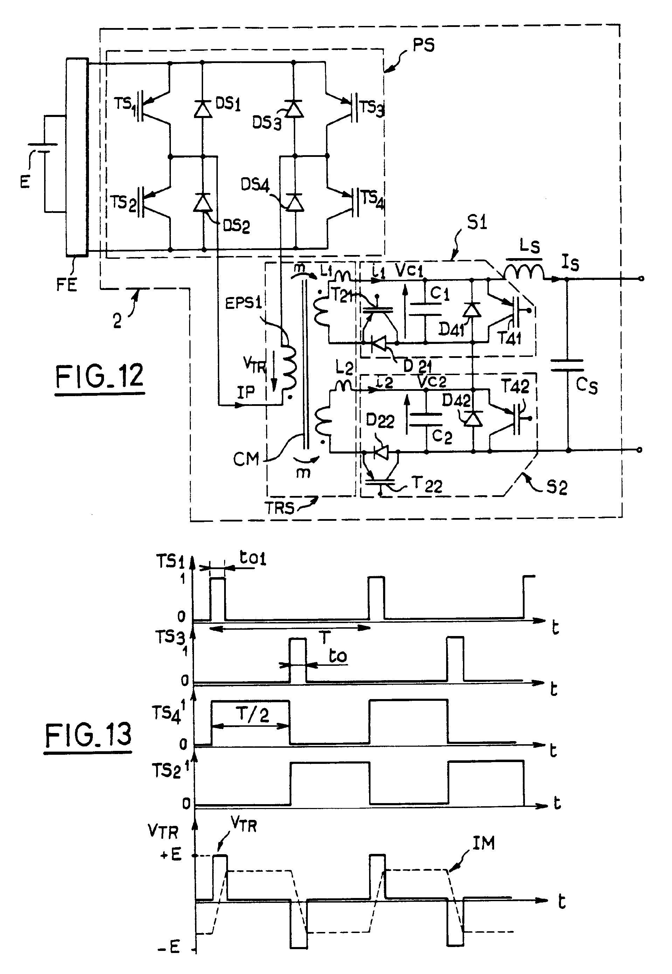

Le circuit de commande M4 du transistor T4 comprend une porte logique PL assurant la fonction logique "NON ET" envers, d'une part, la sortie complémentée Q du monostable M et, d'autre part, un signal égal à la somme de la tension drain-source VDS du transistor TM2 et une tension continue négative (dans l'exemple illustré par la figure 12, égale à 15 V). Cette porte PL commande un étage amplificateur MT4 qui attaque la grille du transistor T4, si celui-ci est un transistor à grille isolée. La fonction de la porte logique PL est de ne permettre la conduction du transistor T4 que lorsque les deux conditions suivantes sont réunies :

a) - blocage du transistor T2 ;
b) - blocage des transistors TB, TH de l'étage primaire P.

La première condition a) est concrétisée par un état bloqué du transistor TM2 de l'étage MT2, qui correspond à une entrée logique 1 sur la porte PL.

La deuxième condition b) est réalisée lorsque la sortie complémentée $\overline{Q}$ du monostable M est au niveau logique 1.

La porte PL présente alors une sortie au niveau logique 0, qui se traduit par la polarisation de l'étage de commande MT4 et la commande à l'état passant du transistor T4. Dès qu'au moins l'une des conditions a), b) n'est plus remplie, le transistor T4 est bloqué.

Le circuit R, C associé à l'amplificateur A appartenant au circuit de commande MP de l'étage primaire P assure un retard $\tau$ du signal de commande QR de l'étage par rapport à la sortie Q du monostable M. Comme le montre la figure 11b, les fronts descendants de la sortie complémentée $\overline{Q}$ sont ainsi en avance par rapport aux fronts montants du signal de commande QR de l'étage primaire P, permettant ainsi l'étape de sécurité ES, pendant laquelle aucun transistor T2 ou T4 n'est commandé, indispensable pour éviter un court-circuit de l'étage secondaire S au début d'une nouvelle phase de conduction directe CD (figure 3).

Un autre mode de réalisation d'un convertisseur mettant en oeuvre le procédé conforme à l'invention est illustré par le schéma électrique de la figure 12. L'étage primaire PS alimenté par la source de tension continue E à travers un filtre FE est un pont symétrique comprenant quatre transistors TS1, TS2, TS3, TS4 et quatre diodes DS1, DS2, DS3, DS4 agencés suivant le montage bien connu en pont symétrique et alimentant un enroulement primaire EPS1 d'un transformateur TRS de rapport de transformation m comprenant en outre deux enroulements secondaires ES1, ES2 connectés respectivement à deux étages secondaires S1, S2 de caractéristiques conformes à l'invention. Les sorties des deux étages S1, S2 sont connectées en série, tandis que les enroulements secondaires ES1, ES2 sont organisés de telle sorte que, lorsqu'une tension donnée est appliquée à l'un des étages, l'autre étage est alors soumis à une tension inverse. Les deux étages sont ainsi alimentés en opposition de phase. Un circuit unique (LS, CS) assure le filtrage de la tension de sortie résultante égale à la somme des tensions VC1 et VC2 aux bornes des condensateurs C1 et C2.

Une telle réalisation présente l'avantage important d'assurer une utilisation quasi-permanente de l'étage primaire PS et du transformateur TRS. Lors de chaque phase de polarisation (positive ou négative) de l'enroulement primaire EPS1, l'un des deux étages secondaires est en action et fonctionne comme l'étage secondaire des modes de réalisation décrits précédemment.

Le mode de commande du pont symétrique PS est illustré par la figure 13 qui présente les chronogrammes de commande de quatre transistors TS1, TS2, TS3, TS4, ainsi que la tension appliquée sur l'enroulement primaire EPS1 et le courant magnétisant IM parcourant cet enroulement. Il correspond au mode commande "entrelacé" bien connu de l'homme du métier.

La première partie d'un cycle CY de ce mode de commande est une phase de conduction directe CD1 durant laquelle la tension appliquée à l'enroulement primaire EPS1 du transformateur TRS est égale à la tension continue E, aux chutes dans les organes de commutation près. Cette phase correspond à la mise en conduction des transistors TS1 et TS4 et à la mise en action de l'étage secondaire S1. A l'issue de cette phase de conduction directe CD1, dont la durée to1 dépend évidemment de la période propre du circuit oscillant (l1, c1) constitué par l'inductance de fuite rapportée au secondaire ES1 du transformateur TRS et par le condensateur d'oscillation C1, le transistor TS4 est maintenu passant afin d'assurer la circulation du courant magnétisant dans l'enroulement primaire EPS1 du transformateur TRS, grâce à la diode DS2. La tension appliquée à l'enroulement primaire est alors nulle. Cette phase, correspondant à la succession des deux étapes ED1 de décharge totale et EM1 de maintien de la tension VC1 aux bornes du condensateur C, dure jusqu'à la moitié du cycle CY en cours. Les transistors TS3 et TS2 sont alors commandés en mode passant avec pour effet d'appliquer une tension négative égale à - E aux bornes de l'enroulement primaire. La phase de conduction directe CD2 correspondant à la mise en action de l'étage secondaire est alors commencée.

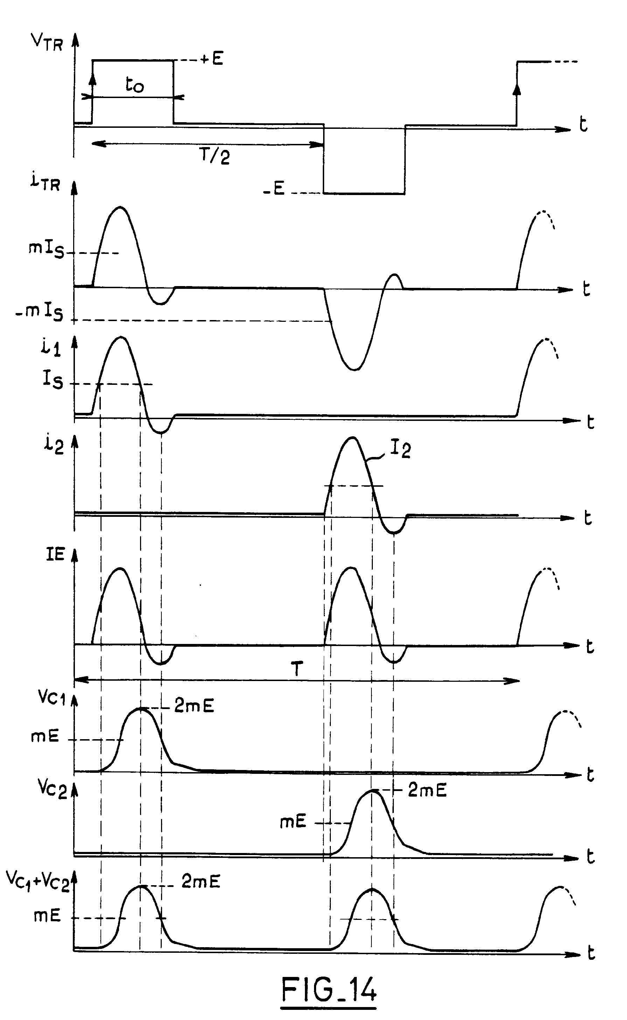

Les deux étages présentent de préférence les mêmes caractéristiques et les mêmes composants, les périodes propres des deux circuits oscillants sont égales et donc aussi les durée to1 et to2 des deux phases de conduction directe. On comprend aisément que la deuxième demi-période du cycle CY présente les mêmes caractéristiques, appliquées à l'étage secondaire S2, que la première demi-période qui concernait l'étage secondaire S1. Dans ce mode de réalisation, le procédé de linéarisation conforme à l'invention est ainsi mis en oeuvre deux fois par période électrique. Les formes d'ondes typiques rencontrées avec ce mode de réalisations sont représentées sur la figure 14.

L'étage primaire PS applique aux bornes de l'enroulement primaire EPS1 une tension VTR de forme d'onde symétrique en créneau d'amplitude ± E. Le courant ITR délivré par l'étage primaire PS est bidirectionnel et présente une oscillation complète disymétrique de période égale à la durée du créneau de tension primaire VTR.

L'étage secondaire S1 est actif dans la première demi-période et le courant secondaire I1 présente une forme d'onde identique à celle du courant primaire ITR, le rapport des amplitudes des courants primaire et secondaire étant égal au rapport de transformation m.

Lors de la seconde demi-période, l'étage S1 est bloqué et l'énergie couvertie est transférée par l'étage secondaire S2. Le courant secondaire I2 présente, avec les conventions de signe adoptées à la figure 12, une forme d'onde inverse de celle du courant primaire. Les tensions VC1 et VC2 aux bornes des condensateurs d'oscillation C1 et C2 présentent des formes d'ondes caractéristiques décrites précédemment et,en particulier, en référence à la figure 8a.

Il faut noter que la tension résultante VC = VC1 + VC2 présente deux impulsions par période électrique, de valeur de crête identique à celle obtenue avec un étage primaire en demi-pont asymétrique, au lieu d'une dans ce dernier cas.

Donc, à contraintes identiques, la puissance convertie dans un convertisseur avec étage primaire en pont symétrique est double de celle convertie dans un convertisseur mettant en oeuvre un demi-pont asymétrique.

En outre, la fréquence électrique de la tension résultante VC est le double de la fréquence électrique d'un convertisseur utilisant un demi-pont asymétrique, ce qui entraîne avantageusement une diminution de la taille du filtre de sortie (LS, CS).

De la même façon, le courant IE délivré par la source de tension continue E, qui est égal à (I1 + I2)m est de fréquence double de celle du courant délivré par la source de tension continue dans une configuration de demi-pont asymétrique. Ce doublement de fréquence conduit à un dimensionnement plus favorable du filtre d'entrée FE placé entre la source de tension continue E et l'étage primaire PS. En outre, le problème, rencontré dans la majorité des structures magnétiques, qui est celui de la polarisation magnétique du transformateur, est évité ou très fortement atténué avec le procédé conforme à l'invention mis en oeuvre dans un convertisseur possédant comme étage primaire un pont symétrique.

La tension VTR aux bornes de l'enroulement primaire EPS1 du transformateur TRS, en référence à la figure 12, doit obligatoirement être à la valeur moyenne nulle pour éviter la circulation d'un courant continu dans le transformateur TRS qui conduirait à une saturation du circuit magnétique CM de ce dernier et la destruction des organes de commutation du convertisseur.

Or, une telle condition est très difficile à respecter dans les structures symétriques du fait de la disymétrie effective des chutes de tension dans les diodes et transistors et des durées de conduction. Il est alors impératif de compenser ces disymétries par un système de contrôle de saturation en général très complexe, dont plusieurs modes de réalisation sont bien connus dans l'art antérieur.

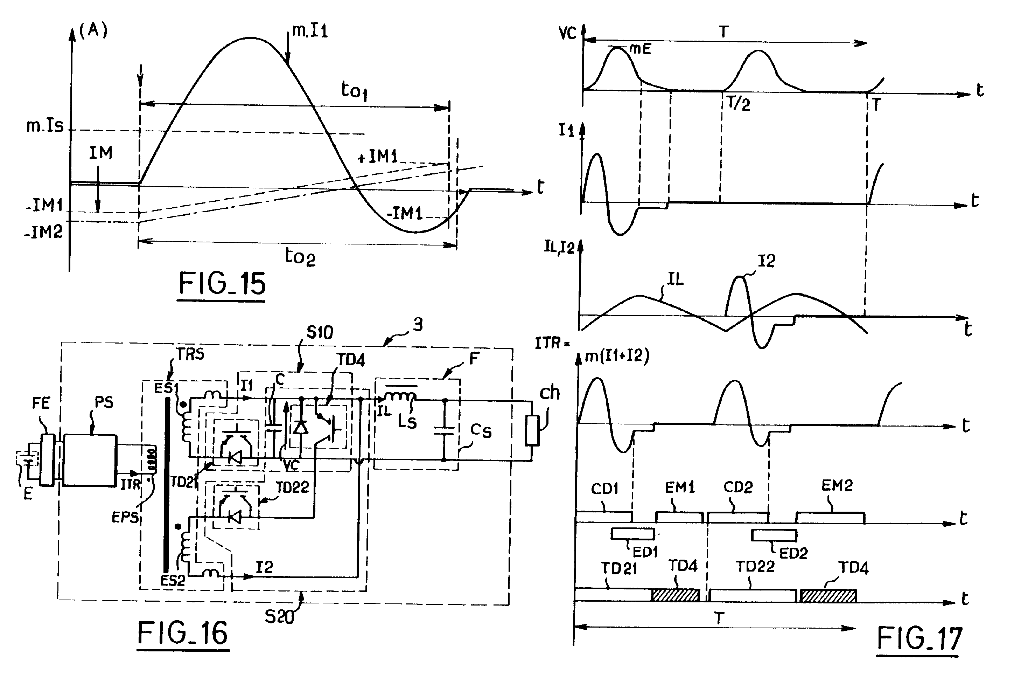

La résonnance bidirectionnelle mise en oeuvre dans le convertisseur conforme à l'invention introduit un contrôle automatique de cette disymétrie, comme le montre le chronogramme de la figure 15, représentant l'évolution du courant primaire du transformateur lors de la phase de conduction directe CD1 de l'étage secondaire S1.

Le courant IP traversant l'enroulement primaire EPS1 est égal à la somme du courant magnétisant IM et du courant m.I1,I1 étant le courant traversant l'étage secondaire S1. Le courant IP traverse aussi les deux composants de commutation bidirectionnels constitués respectivement par (TS1, DS1) et (TS2, DS2). Ces deux organes se bloquent naturellement lorsque le courant IP est nul. Lorsque le système est parfaitement équilibré magnétiquement, le courant magnétisant IM varie d'une valeur -IM1 à l'instant initial t0 de début de la phase de conduction directe CD1 à une valeur +IM1 à l'instant final t1 de blocage (formes d'onde tracées en traits discontinus sur la figure 15).Si, pour une raison quelconque, le courant magnétisant IM a divergé vers une valeur -IM2, avec IM2 supérieur à IM1, avant la commande en conduction des transistors TS1 et TS4, la compensation de la divergence a lieu si la durée de l'impulsion suivante to2 augmente par rapport à la durée correspondant antérieurement à l'équilibre magnétique to1. Or, c'est précisément ce qui se produit dans la configuration conforme à l'invention puisque le courant dans l'enroulement primaire IP, qui est égal à mI1 + IM2, s'annule à l'instant t2 supérieur à t1. On comprend aisément qu'après un nombre fini de cycles, le dispositif aura retrouvé son équilibre magnétique.

Un autre mode avantageux de réalisation d'un convertisseur 3 mettant en oeuvre le procédé conforme à l'invention est illustré par le schéma électrique de la figure 16.

Dans ce mode de réalisation, le convertisseur 3 comprend un transformateur TRS comportant un enroulement primaire EPS alimenté par un pont symétrique PS et deux enroulements secondaires ES1 et ES2 connectés respectivement à deux étages secondaires S10 et S20 possédant en commun le composant de commutation bidirectionnel TD4 et le condensateur d'oscillation C. Seuls les composants de commutation bidirectionnels TD21 et TD22 sont distincts. Les sorties respectives des deux étages S10, S20 sont connectées en parallèle à un filtre de sortie unique F lui-même relié à une charge Ch.

Les modes de commande des transistors de l'étage primaire et des étages secondaires sont identiques à ceux étudiés dans la version précédente dans laquelle les deux étages secondaires étaient connectés en série.

L'avantage de ce mode de réalisation réside dans le fait qu'un seul composant de commutation TD4 est utilisé pour les étapes de maintien EM1 et EM2 exécutées au cours d'une période électrique, comme l'illustre la figure 17.

Durant une période électrique T, le composant de commutation TD4 présente deux phases de conduction correspondant aux deux étapes de maintien EM1, EM2 de la tension VC aux bornes du condensateur C. Les formes d'onde de la tension VC aux bornes du condensateur d'oscillation C et des courants I1 et I2 traversant respectivement les enroulements secondaires ES1 et ES2 sont identiques à celles obtenues dans le mode de réalisation décrit précédemment (connexion des étages secondaires S1, S2 en série).

Le courant IL présente une forme d'onde bidirectionnelle caractéristique d'un fonctionnement en régime de conduction discontinue.

Le courant ITR absorbé par l'enroulement primaire du transformateur est naturellement égal à la somme des courants secondaires I1 et I2 multipliée par le rapport de transformation m.

L'agencement des différentes étapes de commande (CD1/ED1/EM1), (CD2/ED2/EM2) montre que le procédé mis en oeuvre est identique à celui de la réalisation précédente. La seule différence réside dans le fait qu'un composant de commutation bidirectionnel en courant TD4 unique est mis en oeuvre pour la réalisation des deux étapes de maintien EM1, EM2.

Dans tous les modes de réalisation décrits ci-dessus, les composants de commutation bidirectionnels en courant TD2, TD4 peuvent avantageusement comporter des transistors à grille isolée, par exemple des transistors dits IGBT (Insulated Gate Bipolar Transistor) qui mettent en jeu à la fois des porteurs majoritaires (tels les transistors MOS) et des porteurs minoritaires (tels les transistors bipolaires). Ce type de composant est particulièrement bien adapté à la réalisation de convertisseurs mettant en oeuvre le procédé conforme à la présente invention dans la mesure où, en commutation naturelle, il présente un comportement dynamique compatible avec les fréquences de découpage requises (souvent supérieures à 100 kHz). En outre, le blocage naturel à courant nul offre la possibilité de fonctionner à des courants instantanés supérieurs à la valeur spécifiée pour le seuil dit de "latch up", ce qui permet de palier au facteur de dimensionnement médiocre des composants de commutation, spécifique aux structures de convertisseurs pseudo-résonantes.

De plus, ce type de transistor présente une résistance apparente à l'état passant inférieure à celle rencontrée dans des transistors MOS, dans le cas de fonctionnement à tension élevée (VDS $\geqq$ 250 V). Ainsi, la chute de tension typique, pour un composant de caractéristiques nominales 500 V, 10 A, est VDS on = 4 V pour un transistor MOS

VDS on = 2 V pour un transistor IGTB.

On va maintenant expliquer la mise en oeuvre d'un convertisseur utilisant le procédé conforme à l'invention.

On considère pour cela une situation concrète où un opérateur dispose d'un convertisseur conforme à l'invention, tel que celui représenté sur la figure 7, pour assurer la fourniture d'une tension continue de niveau règlable aux bornes d'une charge d'impédance variable, la source primaire d'énergie étant un générateur de tension continue de valeur sensiblement constante.

Les caractéristiques physiques des éléments constitutifs principaux du convertisseur, à savoir le transformateur et le condensateur d'oscillation déterminent la fréquence propre Fo du circuit oscillant (L, C). (Un exemple numérique relevé expérimentalement donne ainsi une valeur de fréquence de 275 kHz). De cette fréquence propre dépend la durée de la phase de conduction directe CD qui est sensiblement égale à 1/Fo.

Deux paramètres permettent de commander la tension de sortie moyenne. L'un est le rapport de transformation m du transformateur TR et ne peut être contrôlé que lors de la réalisation de ce dernier ; l'autre est la fréquence de découpage F qui peut être modifiée à tout moment pendant le fonctionnement du convertisseur dans une plage dont l'étendue maximale théorique est (o, Fo). Dans la pratique, les fréquences de découpage très faibles devant la fréquence propre Fo ne sont pas utilisées au moins pour deux raisons ; d'une part, parce que l'incursion dans le domaine des fréquences auditives conduit à des nuisances importantes pour l'environnement humain, et d'autre part, parce que les filtres d'entrée et de sortie doivent alors être surdimensionnés pour être efficaces à basse fréquence. A l'autre extrême de la plage de fréquence, l'opérateur ne peut en pratique faire coïncider fréquence de découpage F et fréquence propre Fo. Une telle situation provoquerait la destruction du convertisseur notamment par mise en court-circuit du secondaire du transformateur.

L'opérateur peut donc disposer d'un paramètre de règlage de la tension de sortie déterminé par $\alpha$ = F/Fo pouvant évoluer dans une plage ($\alpha$ min, $\alpha$ max) comprise dans l'intervalle (0, 1).

Si la charge présente une impédance variable, la linéarité des caractéristiques (tension - courant) va permettre de mettre en oeuvre un asservissement de tension relativement simple. Si l'impédance est infinie (fonctionnement à vide), un fonctionnement normal du convertisseur est maintenu et il est toujours possible à l'opérateur de régler la tension de sortie au moyen de la fréquence de découpage F.

L'alimentation d'une charge présentant éventuellement une impédance extrêmement faible devant l'impédance nominale pour laquelle a été conçu le convertisseur, nécessite de prévoir un circuit limiteur de courant qui agisse automatiquement sur le circuit de règlage de la fréquence de découpage F pour baisser la tension de sortie VS et ramener ainsi le courant de sortie IS en-deçà du seuil de sécurité.

De nombreuses configurations d'alimentation incluant des convertisseurs conformes à l'invention dotées d'asservissements et de systèmes de sécurité peuvent être envisagées. Des applications dans des gammes de puissance de sortie situées entre I kW et 10 kW sont d'ores et déjà envisagées notamment pour l'alimentation de matériels embarqués, civils et militaires.

Un convertisseur conforme à l'invention a déjà été réalisé et expérimenté. Alimenté par un réseau continu de 450 V, il délivre une puissance de 2 kW sous une tension nominale de 100 V (courant nominal 20 A) avec une fréquence de découpage de 90 kHz.

On peut ainsi envisager l'application du procédé de linéarisation des caractéristiques (tension - courant) à d'autres types de convertisseurs continu-continu, tels que, par exemple, les convertisseurs de type "Flyback" à thyristor résonant.

En outre, les composants de commutation bidirectionnels en courant peuvent être réalisés avec des transistors de toute technologie, si ceux-ci satisfont les exigences de fonctionnement correct à fréquence élevée et peuvent être commandés de façon simple. Ainsi, les nouveaux développements de transistors à grille isolée fonctionnant à haute fréquence et tension élevée peuvent contribuer efficacement à la réalisation de convertisseurs continu-continu mettant en oeuvre le procédé conforme à l'invention toujours plus performants.

## Revendications

1. Procédé de linéarisation des caractéristiques de sortie (tension/courant) d'un convertisseur continu-continu (1) pseudorésonant à transfert direct comprenant un transformateur (TR) comportant un enroulement primaire (EP) et un enroulement secondaire (ES) traversé par un courant (I2) et un condensateur d'oscillation (C), et soumis à des cycles de commande (CY) prédéterminés comprenant chacun une phase de conduction directe (CD), caractérisé en ce qu'au cours de chaque cycle, on provoque successivement :
   - la décharge totale (ED) du condensateur d'oscillation (C), quel que soit le courant de sortie (IS), commencée au plus tard à l'issue de chaque phase de conduction directe (CD),
   - et le maintien (EM) à une valeur sensiblement nulle de la tension (VC) aux bornes dudit condensateur (C) jusqu'au début de la phase de conduction suivante ,
   - la décharge totale (ED) du condensateur (C) comprenant :
      . une étape (ED1) se déroulant durant la phase de conduction directe (CD) et commencée après inversion du courant (IC) dans le condensateur (C), suivie
      . d'une seconde étape (ED2) commencée à l'issue de la phase de conduction directe (CD) et s'achevant avec l'annulation de la tension (VC) aux bornes du condensateur (C).

2. Procédé de linéarisation conforme à la revendication 1, caractérisé en ce que la phase de maintien (EM) comprend :
   - une première étape (EME) de maintien effectif à une valeur sensiblement nulle de la tension (VC) aux bornes du condensateur (C) par des moyens de maintien (TD4) pendant une durée prédéterminée (TM), et immédiatement après,
   - une seconde étape de sécurité (ES), se déroulant jusqu'au début de la phase de conduction directe (CD) suivante et durant laquelle les moyens de maintien (TD4) ne sont pas mis en oeuvre.

3. Convertisseur continu-continu (1, 2, 3) pseudo-résonant à transfert direct comprenant des transformateurs (TR, TR1, ...TRN) comportant chacun un enroulement primaire (EP) connecté à un étage primaire (P) et des enroulements secondaires (ES), chacun desdits enroulements secondaires étant connecté à un étage secondaire (S) comprenant un condensateur d'oscillation (C), un composant à conductibilité unidirectionnelle (D4) connecté en parallèle sur ledit condensateur (C) et un composant à conductibilité unidirectionnelle (D2) en série avec ledit enroulement secondaire (ES) et ledit condensateur (C), caractérisé en ce que chaque étape secondaire comprend en outre :
   - un composant de commutation (T2) connecté en parallèle sur ledit composant à conductibilité unidirectionnelle (D2) en série avec ledit enroulement secondaire (ES) et ledit condensateur (C) et coopérant avec ce dernier composant (D2) pour réaliser un composant de commutation bidirectionnel en courant (TD2), et
   - un composant de commutation (T4) connecté en parallèle sur ledit condensateur d'oscillation (C) et ledit composant à conductibilité unidirectionnelle (D4) et coopérant avec ce dernier pour réaliser un composant de commutation bidirectionnel en courant (TD4).

4. Convertisseur continu-continu (1, 2, 3) conforme à la revendication 3, soumis à des cycles de commande (CY) prédéterminés comportant chacun une phase de conduction directe (CD), caractérisé en ce que chaque étage secondaire (S) comprend des moyens de commande (MC) desdits composants de commutation bidirectionnels en courant (TD2, TD4), assurant d'une part, une décharge totale dudit condensateur d'oscillation (C) à l'issue de ladite phase de conduction directe (CD) et d'autre part, le maintien à une valeur sensiblement nulle de la tension (Vc) aux bornes dudit condensateur (C).

5. Convertisseur continu-continu (1) conforme à la revendication 4, comprenant un transformateur (TR) dont les enroulements primaire (EP) et secondaire (ES) sont respectivement connectés à un étage primaire (P) et à un étage secondaire (S), caractérisé en ce que l'étage primaire (P) comprend un demi-pont asymétrique (PA).

6. Convertisseur continu-continu (2, 3) conforme à la revendication 4, comprenant un transformateur (TR) comportant un enroulement primaire (EP) connecté à un étage primaire (P) et deux enroulements secondaires (ES1, ES2) connectés respectivement à deux étages secondaires (S1, S2), caractérisé en ce que l'étage primaire (P) comprend un pont symétrique (PS).

7. Convertisseur continu-continu (2) conforme à la revendication 6, caractérisé en ce que lesdits étages secondaires (S1, S2) sont connectés électriquement en série, et en ce qu'il comprend des moyens pour commander ces étages en mode entrelacé.

8. Convertisseur continu-continu (3) conforme à la revendication 6, caractérisé en ce que lesdits étages secondaires (S1, S2) sont connectés électriquement en parallèle au niveau du condensateur d'oscillation (C) qui leur est commun, et en ce qu'il comprend des moyens pour commander ces étages en mode entrelacé.

9. Convertisseur continu-continu (3) conforme à la revendication 8, caractérisé en ce que les composants de commutation bidirectionnels en courant de respectivement chacun desdits étages secondaires (S1, S2) sont groupés en un seul composant de commutation bidirectionnel en courant (TD4).

10. Convertisseur continu-continu (1, 2, 3) conforme à l'une des revendications 4 à 9, caractérisé en ce que lesdits moyens de commande (MC) des composants de commutation bidirectionnels en courant (TD2), (TD4) comprennent des moyens de commande (MT2) du composant de commutation (T2) coopérant avec des moyens de détection (D) du signe de la tension (Vc) aux bornes du condensateur d'oscillation (C) pour rendre passant ledit composant de commutation (T2) tant que ladite tension (Vc) est supérieure au seuil de commande dudit organe de commutation (T2), et des moyens de commande (MT4) du composant de commutation (T4), coopérant avec lesdits moyens de commande (MT2) et des moyens de commande (MP) de l'étage primaire (P), pour rendre passant ledit composant de commutation (T4), du blocage du composant de commutation (T2) au début du cycle de commande (CY) suivant.

11. Convertisseur continu-continu (1, 2, 3) conforme à l'une des revendications 3 à 10, caractérisé en ce que les composants de commutation (T2, T4) sont des transistors à grille isolée.

**Patentansprüche**

1. Verfahren zur Linearisierung der Ausgangskennwerte (Spannung/Strom) eines pseudoresonanten Gleichstrom-Gleichstrom-Wandlers (1) mit direktem Energietransfer, wobei der Wandler einen Transformator (TR) mit einer Primärwicklung (EP) und einer Sekundärwicklung (ES), der von einem Strom (I2) durchflossen wird, und einen Schwingkreiskondensator (C) enthält und vorbestimmten Steuerzyklen (CY) unterliegt, die je eine Direktleitphase (CD) enthalten, dadurch gekennzeichnet, daß während jedes Zyklus nacheinander

   - die vollständige Entladung (ED) des Schwingkreiskondensators (C), unabhängig vom Ausgangsstrom, beginnend spätestens am Ende jeder Direktleitphase (CD),
   - und das Halten der Spannung (Vc) an den Klemmen des Kondensators (C) bis zum Beginn der nächsten Leitphase auf einem Wert von praktisch null Volt erfolgen,
   - wobei die vollständige Entladung (ED) des Kondensators (C) einen Verfahrensschritt (ED1), der während der Direktleitphase (CD) abläuft und nach der Umkehr des Stroms (Ic) im Kondensator (C) beginnt, und einen nachfolgenden Verfahrensschritt (ED2) enthält, der am Ende der Direktleitphase (CD) beginnt und mit der Annulierung der Spannung (VC) an den Klemmen des Kondensators (C) endet.

2. Verfahren zur Linearisierung nach Anspruch 1, dadurch gekennzeichnet, daß die Haltephase (EM) einen ersten Verfahrensschritt (EME), in dem die Spannung (Vc) an den Klemmen des Kondensators (C) durch Haltemittel (TD4) während einer vorbestimmten Zeit (TM) wirksam auf einem Wert von im wesentlichen null Volt gehalten wird und unmittelbar anschließend einen zweiten, Sicherheitsverfahrensschritt (ES) aufweist, der bis zum Beginn der nächsten Direktleitphase (CD) abläuft und in dem die Haltemittel (TD4) nicht aktiviert sind.

3. Pseudoresonanter Gleichstrom-Gleichstrom-Wandler (1, 2, 3) mit Direkttransfer, der Transformatoren (TR, TR1, ... TRN) mit je einer Primärwicklung (EP), die an eine Primärstufe (P) angeschlossen ist, und mit Sekundärwicklungen (ES), die je an eine Sekundärstufe (S) mit einem Schwingkreiskondensator (C) angeschlossen sind, ein Bauteil mit nur einer Leitrichtung (D4), das parallel zum Kondensator (C) geschaltet ist, und ein Bauteil mit nur einer Leitrichtung (D2) in Reihe mit der Sekundärwicklung (ES) und dem Kondensator (C) aufweist, dadurch gekennzeichnet, daß jede der Sekundärstufen weiter aufweist:

- ein Schaltelement (T2), das parallel zu dem Bauelement mit nur einer Leitrichtung (D2) liegt, welches mit der Sekundärwicklung (ES) und dem Kondensator (T) in Reihe angeordnet ist, und mit dem Bauelement (D2) mit nur einer Leitrichtung so zusammenwirkt, daß sich ein in beiden Stromrichtungen wirkendes bidirektionales Schaltelement (TD2) ergibt,
- und ein Schaltelement (T4), das parallel zum Schwingkreiskondensator und dem Bauelement mit nur einer Leitrichtung (D4) geschaltet ist und mit letzterem so zusammenwirkt, daß sich ein in beiden Stromrichtungen wirkendes Schaltelement (TD4) ergibt.

4.  Gleichstrom-Gleichstrom-Wandler (1, 2, 3) nach Anspruch 3, der vorgegebenen Steuerzyklen (CY) mit je einer direkten Leitphase (CD) unterworfen ist, dadurch gekennzeichnet, daß jede Sekundärstufe (S) Steuermittel (MC) für die in beiden Stromrichtungen wirkenden Schaltelemente (TD2, TD4) aufweist, die einerseits eine vollständige Entladung des Schwingkreiskondensators (C) am Ende der Direktleitphase (CD) und andererseits bewirken, daß die Spannung (Vc) an den Klemmen des Kondensators (C) auf einem Wert von im wesentlichen null Volt gehalten wird.

5.  Gleichstrom-Gleichstrom-Wandler (1) nach Anspruch 4, mit einem Transformator (TR), dessen Primärwicklung (EP) und Sekundärwicklung (ES) mit einer Primärstufe (P) bzw. einer Sekundärstufe (S) verbunden sind, dadurch gekennzeichnet, daß die Primärstufe (P) eine unsymmetrische Halbbrücke (PA) enthält.

6.  Gleichstrom-Gleichstrom-Wandler (2, 3) nach Anspruch 4 mit einem Transformator (TR), der eine an eine Primärstufe (P) angeschlossene Primärwicklung (EP) und zwei Sekundärwicklungen (ES1, ES2) enthält, die je an eine Sekundärstufe (S1, S2) angeschlossen sind, dadurch gekennzeichnet, daß die Primärstufe (P) eine symmetrische Brücke (PS) enthält.

7.  Gleichstrom-Gleichstrom-Wandler (2) nach Anspruch 6, dadurch gekennzeichnet, daß die Sekundärstufen (S1, S2) elektrisch in Reihe geschaltet sind und daß der Wandler Mittel zur Steuerung dieser Stufen im verschachtelten Betrieb aufweist.

8.  Gleichstrom-Gleichstrom-Wandler (3) nach Anspruch 6, dadurch gekennzeichnet, daß die Sekundärstufen (S1, S2) elektrisch in Höhe des gemeinsamen Schwingkreiskondensators (C) parallelgeschaltet sind und daß der Wandler Mittel zur Steuerung dieser Stufen im verschachtelten Betrieb enthält.

9.  Gleichstrom-Gleichstrom-Wandler (3) nach Anspruch 8, dadurch gekennzeichnet, daß die in beiden Stromrichtungen wirkenden Schaltelemente jeder der Sekundärstufen (S1, S2) in einem einzigen in beiden Stromrichtungen wirkenden Schaltelement (TD4) zusammengefaßt sind.

10. Gleichstrom-Gleichstrom-Wandler (1, 2, 3) nach einem der Ansprüche 4 bis 9, dadurch gekennzeichnet, daß die Steuermittel (MC) für die in beiden Stromrichtungen wirksamen Schaltelemente (TD2, TD4) Steuermittel (MT2) für das Schaltelement (T2), die mit Mitteln (D) zur Erfassung des Vorzeichens der Spannung (Vc) an den Klemmen des Schwingkreiskondensators (C) zusammenwirken, um das Schaltelement (T2) leitend zu machen, wenn die Spannung (Vc) größer als die Steuerschwelle des Schaltelements (T2) wird, und Steuermittel (MT4) für das Schaltelement (T4) aufweisen, die mit den Steuermitteln (MT2) und den Steuermitteln (MP) der Primärstufe (P) zusammenwirken, um das Schaltelement (T4) von der Sperrung des Schaltelements (T2) bis zum Beginn des nächstfolgenden Steuerzyklus (CY) leitend zu steuern.

11. Gleichstrom-Gleichstrom-Wandler (1, 2, 3) nach einem der Ansprüche 3 bis 10, dadurch gekennzeichnet, daß die Schaltelemente (T2, T4) Transistoren mit isoliertem Gate sind.

**Claims**

1.  A method of linearizing the output characteristics (voltage/current) of a direct transfer pseudo-resonant DC-DC converter (1) comprising a transformer (TR) including a primary winding (EP) and a secondary winding (ES) carrying a current (I2), and an oscillation capacitor (C), and subjected to predetermined control cycles (CY) each including a direct conduction phase (CD), the method being characterized in that during each cycle, the following are caused to take place in succession:

the oscillation capacitor (C) is totally discharged (ED) regardless of the output current (IS), with discharge beginning at the latest at the end of each direct conduction phase (CD); and

the voltage (Vc) across the terminals of said capacitor (C) is maintained (EM) at a value substantially equal to zero until the beginning of the following conduction phase:

the total discharge (ED) of the capacitor (C) comprising:

a step (ED1) that takes place during the direct conduction phase (CD) and that begins after the current (IC) flowing through the capacitor (C) has been inverted; followed by

a second step (ED2) that begins at the end of the direct conduction phase (CD) and that terminates when the voltage (Vc) across the terminals of the capacitor (C) becomes zero.

2. A linearization method according to claim 1, characterized in that the maintaining phase (EM) comprises:

a first step (EME) during which the voltage (Vc) across the terminals of the capacitor (C) is effectively maintained by maintaining means (TD4) at a value of substantially zero for a predetermined duration (TM); and immediately thereafter

a safety second step (ES) that takes place until the beginning of the following direct conduction stage (CD) and during which the maintaining means (TD4) are not put into operation.

3. A direct transfer pseudo-resonant DC-DC converter (1, 2, 3) comprising transformers (TR, TR1, ..., TRN) each including a primary winding (EP) connected to a primary stage (P) and secondary windings (ES), each of said secondary windings being connected to a secondary stage (S) including an oscillation capacitor (C), a component having one-way conductivity (D4) connected in parallel with said capacitor (C), and a component having one-way conductivity (D2) connected in series with said secondary winding (ES) and said capacitor (C), the converter being characterized in that each secondary stage further includes:

a switching component (T2) connected in parallel with said component having one-way conductivity (D2) connected in series with said secondary winding (ES) and said capacitor (C) and co-operating with said last-mentioned one-way component (D2) to implement a both-way current switching component (TD2); and

a switching component (T4) connected in parallel with said oscillation capacitor (C) and said one-way conductivity component (D4) and co-operating therewith to implement a both-way current switching component (TD4).

4. A DC-DC converter (1, 2, 3) according to claim 3, subjected to predetermined control cyles (CY) each including a direct conduction phase (CD), the converter being characterized in that each secondary stage (S) includes control means (MC) for controlling said both-way current switching components (TD2, TD4) serving firstly to totally discharge said oscillation capacitor (C) at the end of said direct conduction phase (CD) and secondly to maintain the voltage (Vc) across the terminals of said capacitor (C) to a value of substantially zero.

5. A DC-DC converter (1) according to claim 4, comprising a transformer (TR) whose primary and secondary windings (EP, ES) are respectively connected to a primary stage (P) and to a secondary stage (S), the converter being characterized in that the primary stage (P) comprises an asymmetrical half-bridge (PA).

6. A DC-DC converter (2, 3) according to claim 4, comprising a transformer (TR) including a primary winding (EP) connected to a primary stage (P) and two windings (ES1, ES2) respectively connected to two secondary stages (S1, S2), the converter being characterized in that the primary stage (P) comprises a symmetrical bridge (PS).

7. A DC-DC converter (2) according to claim 6, characterized in that said secondary stages (S1, S2) are electrically connected in series, and in that it includes means for controlling said stages in interdigitated mode.

8. A DC-DC converter (3) according to claim 6, characterized in that said secondary stages (S1, S2) are electrically connected in parallel at the oscillation capacitor (C) which is common to both of them, and in that it includes means for controlling said stages in interdigitated mode.

9. A DC-DC converter (3) according to claim 8, characterized in that the both-way current switching components of each of said secondary stages (S1, S2) respectively, are grouped together as a single both-way current switching component (TD4).

10. A DC-DC converter (1, 2, 3) according to any one of claims 4 to 9, characterized in that the said control means (MC) for controlling the both-way current switching components (TD2, TD4) comprise control means (MT2) for controlling the switching component (T2) that co-operates with detection means (D) for detecting the sign of the voltage (Vc) across the terminals of the oscillation capacitor (C) to cause said switching component (T2) to be conductive so long as said voltage (Vc) is greater than the control threshold of said switching member (T2), and control means (MT4) for controlling the switching component (T4), co-operating with said control means (MT2) and with control means (MP) for the primary stage (P) to cause said switching component (T4) to conduct from the time the switching component (T2) ceases to conduct to the beginning of the following control cycle (CY).

11. A DC-DC converter (1, 2, 3) according to any one of claims 3 to 10, characterized in that the switching components (T2, T4) are insulated gate transistors.

FIG_1a

FIG.2a

FIG_1b

FIG_2b

EP 0 344 067 B1

FIG_3

FIG_4

EP 0 344 067 B1

FIG.5

FIG.6

FIG.7

FIG.8a

FIG.8b

FIG.8c

FIG.8d

FIG_9a

FIG_9b

FIG_10

EP 0 344 067 B1

# FIG.11a

# FIG.11b

FIG.12

FIG.13

FIG_14

FIG_15

FIG_16

FIG_17

EP 0 344 067 B1